(19) Europäisches Patentamt
European Patent Office
Office européen des brevets

(11) **EP 3 590 978 B1**

(12) **EUROPEAN PATENT SPECIFICATION**

(45) Date of publication and mention
of the grant of the patent:
**30.08.2023 Bulletin 2023/35**

(21) Application number: **18760701.5**

(22) Date of filing: **02.03.2018**

(51) International Patent Classification (IPC):
*A01G 24/35* (2018.01)     *C08F 265/02* (2006.01)
*C09K 17/22* (2006.01)     *C08F 2/32* (2006.01)
*C08F 4/04* (2006.01)

(52) Cooperative Patent Classification (CPC):
(C-Sets available)
**A01G 24/35; C08F 2/32; C08F 4/04; C08F 265/02;
C08J 3/24; C09K 17/22**                    (Cont.)

(86) International application number:
**PCT/JP2018/007960**

(87) International publication number:
**WO 2018/159801 (07.09.2018 Gazette 2018/36)**

(54) **WATER-ABSORBENT RESIN, SOIL WATER-RETAINING MATERIAL, AND AGRICULTURAL/HORTICULTURAL MATERIAL**

WASSERABSORBIERENDES HARZ, BODENWASSERRÜCKHALTEMATERIAL UND MATERIAL FÜR LANDWIRTSCHAFT/GARTENBAU

RÉSINE ABSORBANT L'EAU, MATÉRIAU DE RÉTENTION D'EAU DU SOL, ET MATÉRIAU À VISÉE AGRICOLE/HORTICOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2017   JP 2017038980**

(43) Date of publication of application:
**08.01.2020   Bulletin 2020/02**

(73) Proprietor: **Sumitomo Seika Chemicals Co., Ltd.
Kako-gun, Hyogo 675-0145 (JP)**

(72) Inventors:
• **CHIBA, Mikito
  Himeji-shi, Hyogo 672-8076 (JP)**
• **ONODA, Yuichi
  Himeji-shi, Hyogo 672-8076 (JP)**

(74) Representative: **Mewburn Ellis LLP
Aurora Building
Counterslip
Bristol BS1 6BX (GB)**

(56) References cited:
**EP-A1- 2 998 325        WO-A1-2016/111223
JP-A- 2003 290 290       JP-A- 2007 154 350
JP-A- 2013 540 164       JP-A- 2014 098 172
US-A1- 2009 281 247      US-A1- 2014 127 510
US-A1- 2015 216 740**

(52) Cooperative Patent Classification (CPC): (Cont.)

C-Sets
**C08F 265/02, C08F 220/06**

**Description**

Technical Field

The present invention relates to a water-absorbent resin, and more particularly, relates to a water-absorbent resin suitably used as a soil water-retaining material and an agricultural/horticultural material, and to a soil water-retaining material and an agricultural/horticultural material comprising the water-absorbent resin.

Background Art

In recent years, water-absorbent resins have been widely used, for example, in the field of hygienic materials, such as disposable diapers, sanitary napkins, and incontinence pads, and in the field of industrial materials, such as water-blocking materials and dew condensation-preventing materials.

As such water-absorbent resins, crosslinked products of partially neutralized acrylic acid polymers have been proposed as preferable water-absorbent resins, because they have a number of advantages in that, for example, they have good water-absorption capacity; acrylic acid used as a raw material is readily industrially available, and thus, they can be produced at low cost with uniform quality; and they are resistant to decomposition or degradation (see, for example, Patent Literature 1).

In the field of agricultural/horticultural materials as well, by utilizing the water-absorption and -retention properties of such water-absorbent resins, plant cultivation methods have been proposed in which a water-absorbent resin is mixed with a soil to promote the growth, rooting, building of plants (see, for example, Patent Literature 2). Patent Literatures 3-6 disclose water-absorbent resins prepared by reversed-phase suspension polymerization of acrylic acid which can be used as agricultural and horticultural articles, such as water retaining materials for soil.

However, although such water-absorbent resins have high liquid-retaining capacity, they can discharge only small quantities of absorbed water, and thus, may not supply sufficient water to plants.

Citation List

Patent Literature

Patent Literature 1: JP H3-227301 A
Patent Literature 2: JP S62-273283 A Patent Literature 3: EP 2998325 A1, Patent Literature 4: US 2009/281247 A1, Patent Literature 5: US 2014/127510 A1, Patent Literature 6: US 2015/216740 A1

Summary of Invention

Technical Problem

It is a main object of the present invention to provide a water-absorbent resin that exhibits both high water absorbency and high water-discharge capacity.

Solution to Problem

The present inventors conducted extensive research to solve the above-described problem. As a result, the inventors have found that a water-absorbent resin comprising a polymer of (meth)acrylic acid or a salt thereof, wherein, when a cross-sectional image of the water-absorbent resin is observed using X-ray computed tomography, the water-absorbent resin has a ratio of the area of cavity portions (cavity area ratio) in the cross-sectional image from 11% to 32% as calculated according to Equation (I) below, exhibits both high water absorbency and high water-discharge capacity.

$$\text{Cavity area ratio } [\%] = \{\text{total cross-sectional area of cavity portions (B) in the}$$
$$\text{water-absorbent resin/(total cross-sectional area of resin portions (A) in the water-}$$
$$\text{absorbent resin + total cross-sectional area of cavity portions (B) in the water-absorbent}$$
$$\text{resin}\} \times 100 \quad (I).$$

The present invention has been accomplished as a result of further research based on these findings.

In summary, the present invention provides aspects of the invention comprising the following features:

Item 1. A water-absorbent resin comprising a polymer of (meth)acrylic acid or a salt thereof, wherein when a cross-sectional image of the water-absorbent resin is observed using X-ray computed tomography, the water-absorbent resin has a ratio of the area of cavity portions (cavity area ratio) in the cross-sectional image from 11% to 32% as calculated according to Equation (I):

$$\text{cavity area ratio } [\%] = \{\text{total cross-sectional area of cavity portions (B) in the}$$
$$\text{water-absorbent resin/(total cross-sectional area of resin portions (A) in the water-}$$
$$\text{absorbent resin + total cross-sectional area of cavity portions (B) in the water-absorbent}$$
$$\text{resin}\} \times 100 \quad (I).$$

Item 2. The water-absorbent resin according to item 1, wherein the water-absorbent resin has a water-retention ratio under a load of 75% or less.
Item 3. The water-absorbent resin according to item 1 or 2, wherein the water-absorbent resin has a granular shape, a substantially spherical shape, or a shape in which particles having a substantially spherical shape are aggregated.
Item 4. A soil water-retaining material comprising the water-absorbent resin according to any one of items 1 to 3.
Item 5. An agricultural/horticultural material comprising the water-absorbent resin according to any one of items 1 to 3.

Advantageous Effects of Invention

The present invention can provide a water-absorbent resin that exhibits both high water absorbency and high water-discharge capacity. When the water-absorbent resin is mixed into a soil, for example, it can favorably supply water to plants. Furthermore, the present invention can provide a soil water-retaining material, an agricultural/horticultural material, and a plant cultivation method comprising the water-absorbent resin.

Brief Description of Drawings

Fig. 1 is a schematic diagram for use in illustrating a method for measuring the cavity area ratio of a water-absorbent resin using X-ray computed tomography.
Fig. 2(a) is a schematic diagram of a cross-sectional image of a water-absorbent resin taken using X-ray computed tomography; and Fig. 2(b) is a schematic diagram prepared by filling the cavity portions shown in the schematic diagram of Fig. 2(a).

Description of Embodiments

1. Water-Absorbent Resin

The water-absorbent resin of the present invention comprises a polymer of (meth)acrylic acid or a salt thereof, wherein when a cross-sectional image of the water-absorbent resin is observed using X-ray computed tomography, the water-absorbent resin has a ratio of the area of cavity portions (cavity area ratio) in the cross-sectional image from 11% to 32% as calculated according to Equation (I):

$$\text{cavity area ratio [\%]} = \{\text{total cross-sectional area of cavity portions (B) in the water-absorbent resin/(total cross-sectional area of resin portions (A) in the water-absorbent resin + total cross-sectional area of cavity portions (B) in the water-absorbent resin)}\} \times 100 \quad \text{(I)}.$$

The water-absorbent resin of the present invention having the above-described features exhibits both high water absorbency and high water-discharge capacity, and when mixed into a soil, for example, the water-absorbent resin can favorably supply water to plants to promote the growth of the plants. The water-absorbent resin of the present invention will be hereinafter described in detail.

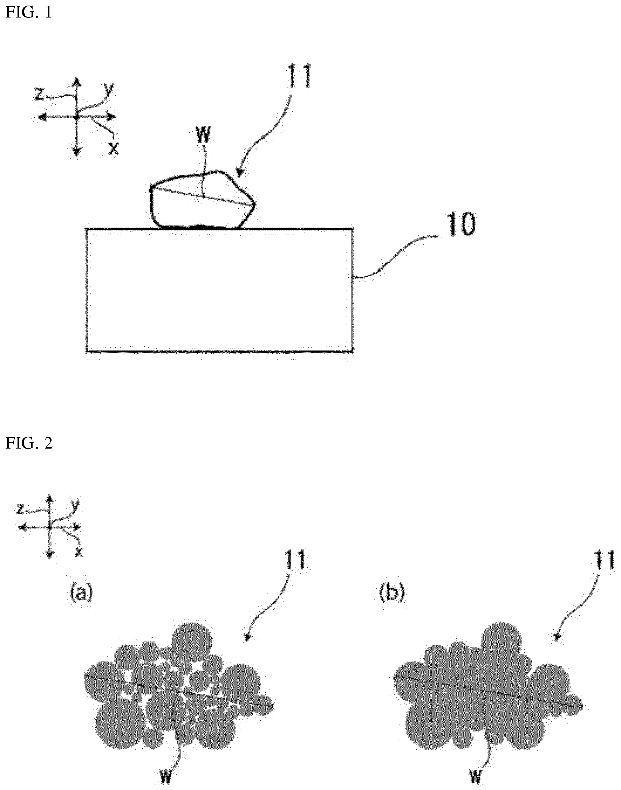

As used herein, the phrase "total cross-sectional area of resin portions in the water-absorbent resin" refers to the total cross-sectional area of portions where the water-absorbent resin is present (filled portions) in the cross-sectional image of the water-absorbent resin, as shown in the schematic diagram of Fig. 2(a), for example. The phrase "total cross-sectional area of cavity portions in the water-absorbent resin" refers to the total area of cavity portions in the water-absorbent resin (blank portions in the water-absorbent resin) in the cross-sectional image of the water-absorbent resin, as shown in the schematic diagram of Fig. 2(a), for example.

Examples of shapes of the water-absorbent resin of the present invention include a granular shape, a substantially spherical shape, a shape in which particles having a substantially spherical shape are aggregated, a crushed indefinite shape, a shape in which particles having a crushed indefinite shape are aggregated, and a flat shape. Through the use of reversed phase suspension polymerization or spray droplet polymerization, a water-absorbent resin can be produced having a granular shape, or a substantially spherical shape, such as a spherical or elliptical shape, or a shape in which particles having a substantially spherical shape are aggregated. Through the use of aqueous solution polymerization, a water-absorbent resin can be produced having a crushed indefinite shape or a shape in which particles having a crushed indefinite shape are aggregated. From the viewpoint of controlling the cavity area ratio, preferred as the shape of the water-absorbent resin is a granular shape, a substantially spherical shape, or a shape in which particles having a substantially spherical shape are aggregated.

When a cross-sectional image of the water-absorbent resin is observed using X-ray computed tomography, the water-absorbent resin has a ratio of the area of cavity portions (cavity area ratio) in the cross-sectional image from 11% to 32% as calculated according to Equation (I) above. From the viewpoint of achieving both high water absorbency and high water-discharge capacity, the cavity area ratio is from 11% to 32%.

In the water-absorbent resin of the present invention, because the cavity area ratio is adjusted from 11% to 32%, the volume of liquid retained in cavity portions (gap portions) of the water-absorbent resin is large, such that the liquid held in the cavity portions can be favorably discharged. Additionally, the water-absorbent resin *per se* (other than the cavity portions) exhibits high water absorbency. It is believed that for these reasons, the water-absorbent resin of the present invention has both high water absorbency and high water-discharge capacity. As described above, for example, soil water-retaining materials obtained using conventional water-absorbent resins can retain water in a soil, because of high water-absorption capacity of the water-absorbent resins; however, they are unsatisfactory in terms of water-supply capacity to plants from the water-absorbent resins, and thus, are not sufficient as a water-supply means for plants that require much water, for example. In contrast, because the water-absorbent resin of the present invention exhibits both high water absorbency and high water-discharge capacity, it can favorably supply water to plants, while exhibiting high water-retention properties in a soil, for example. The water-absorbent resin of the present invention, therefore, can be suitably used as a soil water-retaining material, an agricultural/horticultural material.

In the present invention, the cavity area ratio is measured as follows, using X-ray computed tomography.

<Measurement of Cavity Area Ratio Using X-Ray Computed Tomography>

Particles of the water-absorbent resin are classified in advance with JIS standard sieves. Four particles are randomly selected from particles of the water-absorbent resin on a sieve with a mesh size of 180 μm that pass through a sieve with a mesh size of 600 μm, and these particles are used as resin samples. The resin samples are placed on a sample stage of an X-ray computed tomography apparatus, and cross-sectional image data are acquired using X-ray computed tomography. Next, for each of the resin samples, shapes at given angles or given horizontal and vertical cross sections are observed using image analysis software.

Here, from given cross sections in horizontal directions (x- and y-directions) and a vertical direction (z-direction) with respect to the mounting surface of the sample stage, a horizontal or vertical cross-sectional image having a maximum distance between given two points on the contour of each of the resin samples is selected. Specifically, as shown in the schematic diagram of Fig. 1, for each of the three directions, x-, y-, and z-directions, that are perpendicular to one another, cross-sectional images of a resin sample 11 on a sample stage 10 are acquired first. Subsequently, for each of these directions, one cross-sectional image having the longest particle length w (see Figs. 1 and 2) of the resin sample (i.e., a cross-sectional image taken in a position where the particle length of the resin sample is the longest) is selected. Then, a cross-sectional image having the longest particle length w of the resin sample of these three cross-sectional images is selected.

Next, the cavity area ratio is calculated using this cross-sectional image. By means of general-purpose image processing software, the cross-sectional area of the resin sample (total cross-sectional area of resin portions (A) in the water-absorbent resin) (the area of the filled portions in the schematic diagram of Fig. 2(a)) and the cross-sectional area of the cross section of the resin sample in which cavities are filled (the area of the filled portion in the schematic diagram of Fig. 2(b)) are measured.

The cross-sectional area of cavity portions in the resin sample (total cross-sectional area of cavity portions (B) in the water-absorbent resin) is calculated by subtracting the cross-sectional area of the resin sample from the cross-sectional area of the resin sample in which cavities are filled. Then, the cavity area ratio of the resin sample is calculated according to Equation (I) below. Using this method, the cavity area ratio of the resin sample is measured for each of the four resin samples, and the average value thereof is determined as the cavity area ratio of the water-absorbent resin.

$$\text{Cavity area ratio [\%]} = \{\text{total cross-sectional area of cavity portions (B) in the water-absorbent resin}/(\text{total cross-sectional area of resin portions (A) in the water-absorbent resin} + \text{total cross-sectional area of cavity portions (B) in the water-absorbent resin})\} \times 100 \quad \text{(I)}.$$

The method for measuring the cavity area ratio using X-ray computed tomography is more specifically described in the Examples.

The water-absorbent resin of the present invention preferably has a median particle diameter of 200 to 600 μm, more preferably 250 to 500 μm, still more preferably 300 to 450 μm, and even more preferably 350 to 450 μm,

The median particle diameter of the water-absorbent resin can be measured using JIS standard sieves. More specifically, the median particle diameter represents a value as measured using the method described in the Examples.

From the viewpoint of achieving both high water absorbency and high water-discharge capacity, with regard to the water-retention ratio under a load of the water-absorbent resin of the present invention, the upper limit is preferably 80% or less, more preferably 76% or less, and still more preferably 74% or less; and the lower limit is preferably 55% or more, more preferably 57% or more, and still more preferably 59% or more. Preferred ranges of the water-retention ratio under a load include from 55 to 80%, from 55 to 76%, from 55 to 74%, from 57 to 80%, from 57 to 76%, from 57 to 74%, from 59 to 80%, from 59 to 76%, and from 59 to 74%.

The water-retention ratio under a load of the water-absorbent resin is measured by subjecting the water-absorbent resin that has absorbed water to a load of 21 g/cm$^2$. More specifically, the water-retention ratio under a load represents a value as measured using the method described in the Examples.

The water-absorbent resin of the present invention may contain additives suitable for its purpose. Examples of such additives include inorganic powders, surfactants, oxidizing agents, reducing agents, metal chelating agents, radical chain inhibitors, antioxidants, anti-bacterial agents, and deodorizers. For example, when 0.05 to 5 parts by mass of amorphous silica as an inorganic powder is added to 100 parts by mass of the water-absorbent resin, the flowability of the water-absorbent resin can be improved.

2. Method for Producing Water-Absorbent Resin

The water-absorbent resin of the present invention is produced by polymerizing of (meth)acrylic acid or a salt thereof.

To polymerize (meth)acrylic acid or a salt thereof, a representative polymerization method such as aqueous solution polymerization, spray droplet polymerization, emulsion polymerization, or reversed phase suspension polymerization is used. In aqueous solution polymerization, polymerization is performed by heating, optionally with stirring, an aqueous solution of (meth)acrylic acid or a salt thereof. Examples of methods for controlling the cavity area ratio in aqueous solution polymerization include a method in which a foaming agent, for example, is added to the (meth)acrylic acid or a salt thereof, and a method in which particles of a water-absorbent resin obtained by aqueous solution polymerization are aggregated. In reversed phase suspension polymerization, polymerization is performed by heating (meth)acrylic acid or a salt thereof with stirring in a hydrocarbon dispersion medium. Examples of methods for controlling the cavity area ratio in reversed phase suspension polymerization include a method in which a foaming agent, for example, is added to the first-stage (meth)acrylic acid or a salt thereof, a method in which the median particle diameter of primary particles obtained in the first-stage reversed phase suspension polymerization is controlled; and a method in which a hydrous gel obtained after first-stage polymerization is further heated. In the present invention, reversed phase suspension polymerization is preferred from the viewpoint of allowing precise control of the polymerization reaction and control of a wide range of particle diameters.

One exemplary method for producing the water-absorbent resin of the present invention will be hereinafter described.

Examples of methods for producing the water-absorbent resin include a method for producing the water-absorbent resin by performing reversed phase suspension polymerization of (meth)acrylic acid or a salt thereof in a hydrocarbon dispersion medium, the method including the steps of performing the polymerization in the presence of a radical polymerization initiator; and post-crosslinking a hydrous gel obtained by the polymerization in the presence of a post-crosslinking agent.

In the method for producing the water-absorbent resin of the present invention, an internal-crosslinking agent may be added, as required, to the (meth)acrylic acid or a salt thereof a to obtain a hydrous gel having an internally crosslinked structure.

<Polymerization Step>

(meth)acrylic acid ("acryl" and "methacryl" are herein collectively referred to as "(meth)acryl"; the same applies below) and salts thereof may be used alone or in combination with other water-soluble ethylenically unsaturated monomer such as 2-(meth)acrylamido-2-methylpropanesulfonic acid and salts thereof; nonionic monomers, such as (meth)acrylamide, N,N-dimethyl(meth)acrylamide, 2-hydroxyethyl(meth)acrylate, N-methylol(meth)acrylamide, and polyethylene glycol mono(meth)acrylate; and amino group-containing unsaturated monomers, such as N,N-diethylaminoethyl(meth)acrylate, N,N-diethylaminopropyl(meth)acrylate, and diethylaminopropyl(meth)acrylamide, as well as quaternary compounds thereof.

Acrylic acid and salts thereof are widely used as raw materials of water-absorbent resins. Copolymers of acrylic acid and/or salts thereof with other water-soluble ethylenically unsaturated monomers as mentioned above may also be used. In this case, an acrylic acid and/or a salt thereof as a main water-soluble ethylenically unsaturated monomer is preferably used in an amount of 70 to 100 mol% based on the total amount of water-soluble ethylenically unsaturated monomers.

The (meth)acrylic acid or a salt thereof is preferably dispersed as an aqueous solution in a hydrocarbon dispersion medium, and then subjected to reversed phase suspension polymerization. When the (meth)acrylic acid or a salt thereof is in the form of an aqueous solution, the dispersion efficiency in the hydrocarbon dispersion medium can be increased. The concentration of (meth)acrylic acid or a salt thereof in the aqueous solution is preferably in the range of 20% by mass to the saturation concentration. The concentration of (meth)acrylic acid or a salt thereof is more preferably 55% by mass or less, still more preferably 50% by mass or less, and even more preferably 45% by mass or less. On the other hand, the concentration of (meth)acrylic acid or a salt thereof is more preferably 25% by mass or more, still more preferably 28% by mass or more, and even more preferably 30% by mass or more.

The acid group may be neutralized with an alkaline neutralizing agent, as required, before (meth)acrylic acid or a salt thereof, is used. Examples of such alkaline neutralizing agents include alkali metal salts, such as sodium hydroxide, sodium carbonate, sodium hydrogen carbonate, potassium hydroxide, and potassium carbonate; and ammonia. These alkaline neutralizing agents may be used in the form of aqueous solutions to facilitate the neutralization operation. The above-mentioned alkaline neutralizing agents may be used alone or in combinations of two or more.

The degree of neutralization of (meth)acrylic acid or a salt thereof with an alkaline neutralizing agent, calculated as the degree of neutralization of all acid groups in (meth)acrylic acid or a salt thereof, is preferably 10 to 100 mol%, more preferably 30 to 90 mol%, still more preferably 40 to 85 mol%, and even more preferably 50 to 80 mol%.

[Radical Polymerization Initiator]

Examples of the radical polymerization initiator to be added in the polymerization step include persulfates, such as potassium persulfate, ammonium persulfate, and sodium persulfate; peroxides, such as methyl ethyl ketone peroxide, methyl isobutyl ketone peroxide, di-t-butyl peroxide, t-butyl cumyl peroxide, t-butyl peroxyacetate, t-butyl peroxyisobutyrate, t-butyl peroxypivalate, and hydrogen peroxide; and azo compounds, such as 2,2'-azobis(2-amidinopropane) dihydrochloride, 2,2'-azobis[2-(N-phenylamidino)propane] dihydrochloride, 2,2'-azobis[2-(N-allylamidino)propane] dihydrochloride, 2,2'-azobis{2-[1-(2-hydroxyethyl)-2-imidazolin-2-yl]propane} dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)-propionamide], and 4,4'-azobis(4-cyanovaleric acid). Preferred among these radical polymerization initiators are potassium persulfate, ammonium persulfate, sodium persulfate, and 2,2'-azobis(2-amidinopropane) dihydrochloride, from the viewpoint of being readily available and easy to handle. These radical polymerization initiators may be used alone or in combinations of two or more.

The above-mentioned radical polymerization initiators may also be used in combination with a reducing agent, such as sodium sulfite, sodium hydrogensulfite, ferrous sulfate, or L-ascorbic acid, and used as a redox polymerization initiator.

The amount of the radical polymerization initiator to be used may be, for example, 0.00005 to 0.01 mol per mole of (meth)acrylic acid or a salt thereof, although not particularly limited thereto. When the radical polymerization initiator is used in the above-defined range of amounts, the occurrence of an abrupt polymerization reaction can be avoided, and the polymerization reaction can be completed in an appropriate period of time.

[Internal-Crosslinking Agent]

Examples of the internal-crosslinking agent include those that can crosslink the polymer of (meth)acrylic acid or a salt thereof to be used, for example: unsaturated polyesters obtained by reacting polyols, such as diols and triols, e.g., (poly)ethylene glycol ["(poly)" means both cases with and without the prefix "poly"; the same applies below], (poly)propylene glycol, 1,4-butanediol, trimethylolpropane, and (poly)glycerin, with unsaturated acids, such as (meth)acrylic acid, maleic acid, and fumaric acid; bisacrylamides, such as N,N-methylenebisacrylamide; di or tri(meth)acrylic acid esters obtained by reacting polyepoxides with (meth)acrylic acid; carbamyl di(meth)acrylates obtained by reacting polyisocyanates, such as tolylene diisocyanate and hexamethylene diisocyanate, with hydroxyethyl (meth)acrylate; compounds having two or more polymerizable unsaturated groups, such as allylated starch, allylated cellulose, diallyl phthalate, N,N',N''-triallylisocyanate, and divinylbenzene; polyglycidyl compounds, such as diglycidyl compounds, e.g., (poly)ethylene glycol diglycidyl ether, (poly)propylene glycol diglycidyl ether, and (poly)glycerin diglycidyl ether, and triglycidyl compounds; epihalohydrin compounds, such as epichlorohydrin, epibromohydrin, and $\alpha$-methylepichlorohydrin; compounds having two or more reactive functional groups, such as isocyanate compounds, e.g., 2,4-tolylene diisocyanate and hexamethylene diisocyanate; and oxetane compounds, such as 3-methyl-3-oxetanemethanol, 3-ethyl-3-oxetanemethanol, 3-butyl-3-oxetanemethanol, 3-methyl-3-oxetaneethanol, 3-ethyl-3-oxetaneethanol, and 3-butyl-3-oxetaneethanol. Among these internal-crosslinking agents, polyglycidyl compounds are preferably used, diglycidyl ether compounds are more preferably used, and (poly)ethylene glycol diglycidyl ether, (poly)propylene glycol diglycidyl ether, and (poly)glycerin diglycidyl ether are still more preferably used. These internal-crosslinking agents may be used alone or in combinations of two or more.

The amount of the internal-crosslinking agent to be used is preferably 0.000001 to 0.02 mol, more preferably 0.00001 to 0.01 mol, still more preferably 0.00001 to 0.005 mol, and even more preferably 0.00001 to 0.002 mol, per mole of (meth)acrylic acid or a salt thereof.

[Hydrocarbon Dispersion Medium]

Examples of the hydrocarbon dispersion medium include $C_{6-8}$ aliphatic hydrocarbons, such as n-hexane, n-heptane, 2-methylhexane, 3-methylhexane, 2,3-dimethylpentane, 3-ethylpentane, and n-octane; alicyclic hydrocarbons, such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons, such as benzene, toluene, and xylene. Among these hydrocarbon dispersion media, n-hexane, n-heptane, and cyclohexane, which are readily industrially available, stable in quality, and inexpensive, are particularly suitably used. These hydrocarbon dispersion media may be used alone or in combinations of two or more. Examples of mixtures of hydrocarbon dispersion media include commercially available products, such as Exxsol Heptane (Exxon Mobil Corporation; containing 75 to 85% by mass of heptane and its isomeric hydrocarbons). Favorable results can also be obtained using such a mixture.

The amount of the hydrocarbon dispersion medium to be used is preferably 100 to 1500 parts by mass, and more preferably 200 to 1400 parts by mass, per 100 parts by mass of the first-stage (meth)acrylic acid or a salt thereof. from the viewpoint of homogeneously dispersing (meth)acrylic acid or a salt thereof, and facilitating control of the polymerization temperature. As described below, reversed phase suspension polymerization is performed in one stage (single stage) or two or more multiple stages. The above-mentioned first-stage polymerization refers to the first-stage polymerization reaction in single-stage polymerization or multi-stage polymerization (the same applies below).

[Dispersion Stabilizer]

(Surfactant)

In reversed phase suspension polymerization, a dispersion stabilizer may be used to improve the dispersion stability of (meth)acrylic acid or a salt thereof in the hydrocarbon dispersion medium. A surfactant may be used as such a dispersion stabilizer.

Examples of usable surfactants include sucrose fatty acid esters, polyglycerin fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkyl allyl formaldehyde condensate polyoxyethylene ethers, polyoxyethylene-polyoxypropylene block copolymers, polyoxyethylene polyoxypropyl alkyl ethers, polyethylene glycol fatty acid esters, alkyl glucosides, N-alkyl glyconamides, polyoxyethylene fatty acid amides, polyoxyethylene alkylamines, polyoxyethylene alkyl ether phosphates, and polyoxyethylene alkyl allyl ether phosphates. Among these surfactants, sucrose fatty acid esters, polyglycerin fatty acid esters, and sorbitan fatty acid esters are particularly preferably used, from the viewpoint of dispersion stability of the monomer. These surfactants may be used alone or in combinations of two or more.

The amount of the surfactant to be used is preferably 0.1 to 30 parts by mass, and more preferably 0.3 to 20 parts by mass, per 100 parts by mass of the first-stage (meth)acrylic acid or a salt thereof.

(Polymeric Dispersion Agent)

A polymeric dispersion agent may be used in combination with the above-described surfactant, as a dispersion stabilizer to be used in reversed phase suspension polymerization.

Examples of the polymeric dispersion agent include maleic anhydride modified polyethylene, maleic anhydride modified polypropylene, maleic anhydride modified ethylene-propylene copolymers, maleic anhydride modified EPDM (ethylene-propylene-diene terpolymers), maleic anhydride modified polybutadiene, maleic anhydride-ethylene copolymers, maleic anhydride-propylene copolymers, maleic anhydride-ethylene-propylene copolymers, maleic anhydride-butadiene copolymers, polyethylene, polypropylene, ethylene-propylene copolymers, oxidized polyethylene, oxidized polypropylene, oxidized ethylene-propylene copolymers, ethylene-acrylic acid copolymers, ethyl cellulose, and ethyl hydroxyethyl cellulose. Among these polymeric dispersion agents, maleic anhydride modified polyethylene, maleic anhydride modified polypropylene, maleic anhydride modified ethylene-propylene copolymers, maleic anhydride-ethylene copolymers, maleic anhydride-propylene copolymers, maleic anhydride-ethylene-propylene copolymers, polyethylene, polypropylene, ethylene-propylene copolymers, oxidized polyethylene, oxidized polypropylene, and oxidized ethylene-propylene copolymers are particularly preferably used, from the viewpoint of dispersion stability of the monomer. These polymeric dispersion agents may be used alone or in combinations of two or more.

The amount of the polymeric dispersion agent to be used is preferably 0.1 to 30 parts by mass, and more preferably 0.3 to 20 parts by mass, per 100 parts by mass of the first-stage water-soluble ethylenically unsaturated monomer.

[Other Components]

In the method for producing the water-absorbent resin, other components may be optionally added to the aqueous solution containing (meth)acrylic acid or a salt thereof, which is then subjected to reversed phase suspension polymerization. Various additives such as thickeners, foaming agents, and chain transfer agents may be added as other components.

(Thickener)

By way of example, a thickener may be added to the aqueous solution containing (meth)acrylic acid or a salt thereof, which is then subjected to reversed phase suspension polymerization. When a thickener is thus added to adjust the viscosity of the aqueous solution, the median particle diameter obtained by reversed phase suspension polymerization can be controlled.

Examples of usable thickeners include hydroxyethylcellulose, hydroxypropylcellulose, methylcellulose, carboxymethylcellulose, polyacrylic acid, (partially) neutralized polyacrylic acid, polyethylene glycol, polyacrylamide, polyethyleneimine, dextrin, sodium alginate, polyvinyl alcohol, polyvinylpyrrolidone, and polyethylene oxide. Assuming that the stirring rate during the polymerization is the same, the higher the viscosity of the aqueous solution containing (meth)acrylic acid or a salt thereof, the larger the median particle diameter of the primary particles and/or secondary particles of the resulting particles tends to be.

(Foaming Agent)

By way of example, a foaming agent may be added to the aqueous solution containing (meth)acrylic acid or a salt thereof, which is then subjected to reversed phase suspension polymerization. When a foaming agent is thus added to introduce foam into the aqueous solution, the cavity area ratio of the particles obtained by reversed phase suspension polymerization can be controlled. Various foaming agents such as carbonates and hydrogencarbonates may be used as the foaming agent.

[Reversed Phase Suspension Polymerization]

Reversed phase suspension polymerization is performed by, for example, dispersing an aqueous monomer solution containing (meth)acrylic acid or a salt thereof in a hydrocarbon dispersion medium, in the presence of a dispersion stabilizer. Here, so long as the dispersion stabilizer (a surfactant or a polymeric dispersion agent) is added before the beginning of the polymerization reaction, it may be added either before or after the aqueous monomer solution is dispersed in the hydrocarbon dispersion medium.

In particular, from the viewpoint of readily reducing the amount of the hydrocarbon dispersion medium remaining in the resulting water-absorbent resin, it is preferred to disperse the aqueous monomer solution in the hydrocarbon dispersion medium in which a polymeric dispersion agent is dispersed, and then disperse a surfactant therein, followed by polymerization.

Such reversed phase suspension polymerization can be performed in a single stage or two or more multiple stages. From the viewpoint of enhancing productivity, reversed phase suspension polymerization is preferably performed in two or three stages.

Reversed phase suspension polymerization with two or more multiple stages may be performed as follows: the first-stage reversed phase suspension polymerization is performed; subsequently, (meth)acrylic acid or a salt thereof is added to the reaction mixture obtained by the first-stage polymerization reaction and mixed, and reversed phase suspension polymerization in the second and subsequent stages is performed in the same manner as in the first stage. In reversed phase suspension polymerization in each of the second and subsequent stages, in addition to (meth)acrylic acid or a salt thereof, a radical polymerization initiator is preferably added within the above-described range of molar ratios of each component relative to (meth)acrylic acid or a salt thereof, based on the amount of (meth)acrylic acid or a salt thereof added during reversed phase suspension polymerization in each of the second and subsequent stages. In the second and subsequent stages of polymerization, an internal-crosslinking agent may also be added, as required, to (meth)acrylic acid or a salt thereof.

The reaction temperature during the polymerization reaction is preferably 20 to 110°C, and more preferably 40 to 90°C, from the viewpoint of allowing the polymerization to proceed quickly to reduce the polymerization time for improved economical efficiency, and readily removing the heat of polymerization to perform the reaction smoothly.

In the method for producing the water-absorbent resin of the present invention, as required, the system in which the hydrous gel is dispersed in the hydrocarbon dispersion medium after the first-stage reversed phase suspension polymerization may be heated, and/or the hydrous gel may be dehydrated, by applying external energy, such as heat. The heating temperature for heating the system is preferably 50 to 100°C, and more preferably 60 to 90°C. The heating time is preferably 0.1 to 3 hours.

To remove the water in the hydrous gel, the water in the system is distilled out of the system, while refluxing the hydrocarbon dispersion medium into the system by azeotropic distillation of the hydrocarbon dispersion medium and the water. The water content in the hydrous gel after distillation is preferably 1 to 200 parts by mass, more preferably 10 to 180 parts by mass, still more preferably 30 to 160 parts by mass, and even more preferably 60 to 140 parts by mass, per 100 parts by mass of (meth)acrylic acid or a salt thereof. The heating temperature for performing the dehydration is preferably 70 to 180°C, more preferably 80 to 160°C, still more preferably 90 to 140°C, and even more preferably 100 to 130°C.

The aqueous monomer solution may be stirred with any of various well-known stirring blades. Specific examples of usable stirring blades include propeller blades, paddle blades, anchor blades, turbin blades, Pfaudler blades, ribbon blades, FULLZONE blades (Shinko Pantec Co., Ltd.), MAXBLEND blades (Sumitomo Heavy Industries, Ltd.), and SUPERMIX blades (Satake Chemical Equipment Mfg., Ltd.). The median particle diameter of the primary particles obtained in the first-stage polymerization can be controlled by adjusting the stirring rate in the first-stage reversed phase suspension polymerization. The stirring rate can be adjusted by adjusting the rotation speed of the stirrer, for example.

In the method for producing the water-absorbent resin of the present invention, the above-described cavity area ratio can be controlled to 5% or more, by, for example, adjusting the amount of the radical polymerization initiator and the amount of the internal-crosslinking agent to be added to (meth)acrylic acid or a salt thereof during reversed phase suspension polymerization, or by controlling the median particle diameter of the primary particles in the first-stage polymerization, or by heating and/or dehydrating the hydrous gel after the first-stage polymerization. These operations may be performed alone or in combination.

\<Post-Crosslinking Step\>

The water-absorbent resin of the present invention may be obtained by post-crosslinking the hydrous gel having an internally crosslinked structure obtained by polymerizing (meth)acrylic acid or a salt thereof, using a post-crosslinking agent (post-crosslinking reaction). The post-crosslinking reaction is preferably preformed in the presence of a post-crosslinking agent, after the polymerization of the water-soluble ethylenically unsaturated monomer. When the hydrous gel having an internally crosslinked structure is thus subjected to the post-crosslinking reaction after the polymerization, a water-absorbent resin can be obtained in which the crosslinking density in the vicinity of the surface has been increased to improve various kinds of performance, such as the water-absorption capacity under a load.

Examples of the post-crosslinking agent include compounds having two or more reactive functional groups, for example: polyols, such as ethylene glycol, propylene glycol, 1,4-butanediol, trimethylolpropane, glycerin, polyoxyethylene glycol, polyoxypropylene glycol, and polyglycerin; polyglycidyl compounds, such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether; haloepoxy compounds, such as epichlorohydrin, epibromohydrin, and $\alpha$-methylepichlorohydrin; isocyanate compounds, such as 2,4-tolylene diisocyanate and hexamethylene diisocyanate; oxetane compounds, such as 3-methyl-3-oxetanemethanol, 3-ethyl-3-oxetanemethanol, 3-butyl-3-oxetanemethanol, 3-methyl-3-oxetaneethanol, 3-ethyl-3-oxetaneethanol, and 3-butyl-3-oxetaneethanol; oxazoline compounds, such as 1,2-ethylenebisoxazoline; carbonate compounds, such as ethylene carbonate; and hydroxyalkylamide compounds, such as bis[N,N-di($\beta$-hydroxyethyl)]adipamide. Preferred among these post-crosslinking agents are polyglycidyl compounds, such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether. These post-crosslinking agents may be used alone or in combinations of two or more.

The amount of the post-crosslinking agent to be used is preferably 0.00001 to 0.01 mol, more preferably 0.00005 to 0.005 mol, and still more preferably 0.0001 to 0.002 mol, per mole of the (meth)acrylic acid or a salt thereof used for polymerization. When reversed phase suspension polymerization is performed in two or more multiple stages, the amount of (meth)acrylic acid or a salt thereof that serves as a basis of the amount of the post-crosslinking agent to be used corresponds to the total amount of (meth)acrylic acid or a salt thereof used in each of the stages.

The post-crosslinking agent may be added as is or as an aqueous solution. As required, the post-crosslinking agent may be added as a solution in which a hydrophilic organic solvent is used as a solvent. Examples of the hydrophilic organic solvent include lower alcohols, such as methyl alcohol, ethyl alcohol, n-propyl alcohol, and isopropyl alcohol; ketones, such as acetone and methyl ethyl ketone; ethers, such as diethyl ether, dioxane, and tetrahydrofuran; amides, such as N,N-dimethylformamide; and sulfoxides, such as dimethylsulfoxide. These hydrophilic organic solvents may be used alone, in combinations of two or more, or as a mixture with water.

The post-crosslinking agent may be added after the polymerization reaction of (meth)acrylic acid or a salt thereof is substantially completed. The post-crosslinking agent is preferably added in the presence of 1 to 400 parts by mass of water, more preferably 5 to 200 parts by mass of water, still more preferably 10 to 100 parts by mass of water, and even more preferably 20 to 60 parts by mass of water, per 100 parts by mass of (meth)acrylic acid or a salt thereof. The amount of water herein refers to the total amount of the water contained in the reaction system and the water that is used, as required, during the addition of the post-crosslinking agent.

The reaction temperature during the post-crosslinking reaction is preferably 50 to 250°C, more preferably 60 to 180°C, still more preferably 60 to 140°C, and even more preferably 70 to 120°C. The reaction time of the post-crosslinking reaction is preferably 1 to 300 minutes, and more preferably 5 to 200 minutes.

\<Drying Step\>

The method for producing the water-absorbent resin of the present invention may include, after performing reverse phase suspension polymerization as described above, a drying step of adding external energy, such as heat, to the system to remove the water, the hydrocarbon dispersion medium out of the system by distillation. To remove the water in the hydrous gel after reversed phase suspension polymerization, the system in which the hydrous gel is dispersed in the hydrocarbon dispersion medium is heated to distill the water and the hydrocarbon dispersion medium out of the system by azeotropic distillation. Here, if the distilled hydrocarbon dispersion medium only is returned into the system, continuous azeotropic distillation can be performed. In this case, the resin is unlikely to deteriorate, because the temperature in the system during drying is maintained at a temperature not higher than the azeotropic temperature with the hydrocarbon dispersion medium. Subsequently, the water and the hydrocarbon dispersion medium are distilled off to obtain particles of the water-absorbent resin. By controlling the treatment conditions for the drying step after the polymerization to adjust the amount of water to be removed, various kinds of performance of the resulting water-absorbent resin can be controlled.

In the drying step, the drying treatment may be performed under atmospheric pressure or reduced pressure.

The drying treatment may also be performed in a stream of nitrogen, from the viewpoint of enhancing the drying efficiency. When the drying treatment is performed under atmospheric pressure, the drying temperature is preferably 70 to 250°C, more preferably 80 to 180°C, still more preferably 80 to 140°C, and even more preferably 90 to 130°C. When the drying treatment is performed under reduced pressure, the drying temperature is preferably 40 to 160°C, and more preferably 50 to 110°C.

When the post-crosslinking step with a post-crosslinking agent is performed after the polymerization of the monomer by reversed phase suspension polymerization, it is preferred to perform the above-described drying step, after the completion of the post-crosslinking step.

Furthermore, various additives such as chelating agents, reducing agents, oxidizing agents, anti-bacterial agents, and deodorizers may be added, as required, to the water-absorbent resin, after polymerization, during drying, or after drying.

3. Soil Water-Retaining Material and Agricultural/Horticultural Material

The water-absorbent resin of the present invention exhibits both high water absorbency and high water-discharge capacity, and thus, can be suitably used as, for example, a soil water-retaining material or an agricultural/horticultural material.

When the water-absorbent resin of the present invention is used as a soil water-retaining material, specific forms of use thereof are not particularly limited; for example, the water-absorbent resin of the present invention may be mixed with a soil, a fertilizer to be used as an agricultural/horticultural material, such as a horticultural soil, having improved soil water-retention capacity. The agricultural/horticultural material contains the water-absorbent resin of the present invention, and may be used, for example, as a horticultural soil having water-retention properties improved by the water-absorbent resin of the present invention, or the agricultural/horticultural material may be used as a soil water-retaining material. The amount of the water-absorbent resin of the present invention contained in the agricultural/horticultural material is not particularly limited, and may be appropriately adjusted according to the type of the plant to be cultivated, the cultivation environment of the plant.

Furthermore, the water-absorbent resin of the present invention can be directly mixed into the ground, pot in which a plant is to be cultivated to improve the soil water-retention capacity. In this form of use, the water-absorbent resin of the present invention is used as a soil water-retaining material, and the water-absorbent resin of the present invention is mixed into the ground, pot in which a plant is to be cultivated. In this form of use as well, the amount of the water-absorbent resin of the present invention to be used is not particularly limited, and may be appropriately adjusted according to the type of the plant to be cultivated, the cultivation environment of the plant.

Examples

The present invention will be hereinafter described in detail by way of examples and comparative examples, although the present invention is not limited to the examples.

Water-absorbent resins obtained in the following examples and comparative examples were evaluated by the various tests described below. Each of the testing methods for evaluation will be hereinafter described.

<Measurement of Cavity Area Ratio Using X-Ray Computed Tomography>

Particles of the water-absorbent resin were classified in advance with JIS standard sieves. Four particles were randomly selected from particles of the water-absorbent resin on a sieve with a mesh size of 180 $\mu$m that passed through a sieve with a mesh size of 600 $\mu$m, and these particles were used as resin samples. The resin samples were placed on a sample stage of an X-ray computed tomography apparatus (MicroXCT-400 from Xradia Inc.), and cross-sectional image data were acquired using X-ray computed tomography. Next, for each of the resin samples, shapes at given angles or given horizontal and vertical cross sections were observed using image analysis software (myVGL from Volume Graphics GmbH).

Here, from given cross sections in horizontal directions (x- and y-directions) and a vertical direction (z-direction) with respect to the mounting surface of the sample stage, a horizontal or vertical cross-sectional image having a maximum distance between given two points on the contour of each of the resin samples was selected. Specifically, as shown in the schematic diagram of Fig. 1, for each of the three directions, x-, y-, and z-directions, that are perpendicular to one another, cross-sectional images of the resin sample 11 on the sample stage 10 were acquired first. Subsequently, for each of these directions, one cross-sectional image having the longest particle length w (see Figs. 1 and 2) of the resin sample (i.e., a cross-sectional image taken in a position where the particle length of the resin sample was the longest) was selected. Then, a cross-sectional image having the longest particle length w of the resin sample of these three cross-sectional images was selected.

More specifically, initially, cross sections (z-x sections) of slices of the resin sample were observed in y-direction while shifting the position in y-direction with respect to the mounting surface of the sample stage, and a z-x cross section having the longest particle length w of the resin sample (see Figs. 1 and 2) was acquired. Similarly, cross sections (a z-y cross section and an x-y cross section) having the longest particle length of the resin sample as observed in x- and z-directions were acquired. Then, a cross section having the longest particle length w of the resin sample of these three cross sections was selected.

Next, the cavity area ratio was calculated using this cross-sectional image. By means of general-purpose image processing software (NanoHunter NS2K-Pro/Lt from Nanosystem Corporation), the cross-sectional area of the resin sample (total cross-sectional area of resin portions (A) in the water-absorbent resin) (the area of the filled portions in the schematic diagram of Fig. 2(a)) and the cross-sectional area of the cross section of the resin sample in which cavities are filled (the area of the filled portion in the schematic diagram of Fig. 2(b)) were measured. The cross-sectional area of cavity portions in the resin sample (total cross-sectional area of cavity portions (B) in the water-absorbent resin) was calculated by subtracting the cross-sectional area of the resin sample from the cross-sectional area of the resin sample in which cavities are filled. Then, the cavity area ratio of the resin sample was calculated according to Equation (I) below. Using this method, the cavity area ratio of the resin sample was measured for each of the four resin samples, and the average value thereof was determined as the cavity area ratio of the water-absorbent resin.

$$\text{Cavity area ratio } [\%] = \{\text{total cross-sectional area of cavity portions (B) in the water-absorbent resin}/(\text{total cross-sectional area of resin portions (A) in the water-absorbent resin} + \text{total cross-sectional area of cavity portions (B) in the water-absorbent resin})\} \times 100 \quad (I).$$

The conditions for X-ray computed tomography were as follows:

Apparatus: MicroXCT-400 (Xradia Inc.)
X-ray tube voltage: 80 kV
X-ray tube current: 122 $\mu$A
Optical lens: 10 times
Irradiation time: 0.8 sec
Pixel size: 2.149 $\mu$m
X-ray source-to-sample distance: 29.1533 mm
Detector-to-sample distance: 7.3723 mm
Imaging range: -90° to 90°
Image analyzer: myVGL 2.2 (Volume Graphics GmbH)

<Median Particle Diameter>

JIS standard sieves having mesh sizes of 850 $\mu$m, 600 $\mu$m, 500 $\mu$m, 425 $\mu$m, 300 $\mu$m, 250 $\mu$m, and 150 $\mu$m, and a receiving tray were combined in this order from the top.

50 g of the water-absorbent resin was placed on the top sieve of the combined sieves, and shaken for 20 minutes with a Ro-Tap shaker to conduct classification. After the classification, the particle size distribution was determined by calculating the mass of the water-absorbent resin remaining on each sieve as the mass percentage relative to the total mass. On the basis of this particle size distribution, the mass percentage of the water-absorbent resin remaining on the sieve was integrated in descending order of mesh size. Thereby, the relationship between the sieve mesh size and the integrated value of the mass percentage of the water-absorbent resin remaining on the sieve was plotted on logarithmic probability paper. The plots on the probability paper were connected with straight lines, and a particle diameter equivalent to 50% by mass of the integrated mass percentage was determined as the median particle diameter.

<Physiological Saline-Retention Capacity>

500 g of a 0.9% by mass aqueous solution of sodium chloride (physiological saline) was weighed out into a 500-ml beaker, and 2.0 ± 0.001 g of the water-absorbent resin was dispersed therein with stirring using a magnetic stirrer bar (8 mm in diameter × 30 mm, without a ring) at 600 rpm, while avoiding the formation of unswollen lumps. The dispersion was allowed to stand with stirring for 30 minutes, such that the water-absorbent resin was sufficiently swollen. The dispersion was subsequently poured into a cotton bag (Cottonbroad No. 60, 100 mm in width × 200 mm in length), and the top of the cotton bag was closed with a rubber band. Then, the cotton bag was dehydrated for 1 minute using a dehydrator (product number: H-122 from Kokusan Co., Ltd.) set at a centrifugal force of 167 G, and the mass Wa (g) of the dehydrated cotton bag containing the swollen gel was measured. The same procedure was performed without adding the water-absorbent resin, and the mass Wb (g) of the empty cotton bag upon wetting was measured. The physiological saline-retention capacity of the water-absorbent resin was calculated according to the following equation:

$$\text{Physiological saline-retention capacity (g/g)} = [Wa - Wb] \text{ (g)/mass (g) of the water-absorbent resin}$$

<Measurement of Water-Retention Ratio under a Load>

The water-retention ratio under a load was measured in a room adjusted to a temperature of 25°C ± 1°C. 200 g of water (distilled water; RFD343HA from ADVANTEC was used) adjusted to a temperature of 25°C in a thermostat was placed in a 200-ml beaker, and 0.05 ± 0.001 g of the water-absorbent resin was dispersed therein with stirring using a magnetic stirrer bar (8 mm in diameter × 30 mm, without a ring) at 600 rpm, while avoiding the formation of unswollen lumps. The dispersion was allowed to stand with stirring for 60 minutes, such that the water-absorbent resin was sufficiently swollen.

Next, the mass (W0) of a cylinder with an inside diameter of 60 mm and a height of 70 mm, having a 400-mesh stainless steel mesh attached to the bottom, was measured. Then, all contents in the beaker were poured into the cylinder, and the water was drained for 1 minute through a wire gauze with a thickness of 1 mm and a mesh of 1.5 mm. The mass (W1) of the cylinder (containing the water-absorbent resin after draining the water) after draining the water for 1 minute was measured. Then, a water absorption factor of the water-absorbent resin after draining the water for 1 minute was calculated from W0 and W1, according to the following equation:

$$\text{Water-absorption factor (g/g) after draining the water for 1 minute} = \{[W1 - (W0 + \text{mass of the water-absorbent resin})]/\text{mass of the water-absorbent resin}\} \times 100$$

Next, a weight capable of evenly applying a load of 21 g/cm$^2$ was placed on the water-absorbent resin after draining the water, and the water was again drained for 15 minutes through the wire gauze. The mass (W2) of the cylinder (containing the water-absorbent resin after draining the water under a load) after draining the water under a load was measured. Then, a water absorption factor of the water-absorbent resin after draining the water under a load for 15 minutes was calculated from W2 and W0, according to the following equation:

$$\text{Water-absorption factor (g/g) after draining the water under a load for 15 minutes} = \{[W2 - (W0 + \text{mass of the water-absorbent resin})]/\text{mass of the water-absorbent resin}\} \times 100$$

From the water absorption factor after draining the water for 1 minute and the water absorption factor after draining the water under a load for 15 minutes, the water-retention ratio under a load was calculated as follows:

$$\text{Water-retention ratio under a load (\%)} = \{(\text{water absorption factor after draining the water under a load for 15 minutes})/(\text{water absorption factor after draining the water for 1 minute})\} \times 100$$

<Plant Growth Test>

500 g of water was added to a 1000-ml beaker with a rotor, and, while stirring with a magnetic stirrer, 0.3 g of the water-absorbent resin was added into a vortex, and stirring was performed for 1 hour. The water-absorbent resin after stirring was filtered through a 100-mesh stainless steel sieve, and the water was drained for 10 minutes. 50 g of the water-absorbent resin after draining the water was mixed into 50 g of a commercially available home garden soil (soil mix for flowers and vegetables "ACE" from Applied Natural Products Co., Ltd.). The resulting soil was placed in a petri dish with an inside diameter of 95 mm and a height of 15 mm. Ten commercially available seeds (radish sprouts from Kaneko Seeds Co., Ltd.) were distributed over the soil. This petri dish was allowed to stand in a thermostatic chamber at 25°C for 7 days, and the growth condition of each seed was observed. Then, the average of the growth lengths of six seedlings, excluding two seedlings having the longest growth lengths and two seedlings having the shortest growth lengths, of the seedlings grown from the seeds, was determined as the average growth length (cm) of the seedlings.

<Production of Water-Absorbent Resin>

(Example 1)

A 2-L cylindrical round-bottomed separable flask was prepared which had an inside diameter of 110 mm, and was equipped with a reflux condenser, a dropping funnel, a nitrogen gas inlet tube, and a stirrer having stirring blades composed of two sets of four inclined paddle blades with a blade diameter of 50 mm. As a hydrocarbon dispersion medium, 300 g of n-heptane was placed in this flask, and then 0.74 g of a sucrose stearate having an HLB of 3 (Ryoto sugar ester S-370 from Mitsubishi-Kagaku Foods Corporation) as a surfactant and 0.74 g of a maleic anhydride modified ethylene-propylene copolymer (Hi-wax 1105A from Mitsui Chemicals, Inc.) as a polymeric dispersion agent were added thereto. The mixture was heated with stirring to 80°C to dissolve the surfactant, and then cooled to 50°C.

Separately, 92 g (1.02 mol) of an 80% by mass aqueous solution of acrylic acid was placed in a 500-mL Erlenmeyer flask, and 146.0 g of a 21% by mass aqueous solution of sodium hydroxide was added dropwise, with external cooling, to accomplish 75 mol% neutralization. Then, 0.092 g of hydroxyethylcellulose (HEC AW-15F from Sumitomo Seika Chemicals Co. Ltd.) as a thickener, 0.11 g (0.00041 mol) of 2,2'-azobis(2-amidinopropane) dihydrochloride as an azo-based compound, and 0.0064 g (0.000037 mol) of ethylene glycol diglycidyl ether as an internal-crosslinking agent were added and dissolved. As a result, an aqueous monomer solution was prepared.

The rotation speed of the stirrer was adjusted to 600 rpm, and then the aqueous monomer solution prepared as described above was added into the separable flask, and the atmosphere in the system was sufficiently replaced with nitrogen. The flask was subsequently immersed in a water bath at 70°C and heated to start polymerization. Next, at the time when the temperature in the system reached a peak temperature (80 to 90°C) of polymerization, the rotation speed of the stirrer was changed to 1000 rpm, and the flask was heated in an oil bath at 125°C to distill 23 g of the water out of the system while refluxing n-heptane by azeotropic distillation of the water and n-heptane. As a result, first-stage polymerization slurry was obtained.

Separately, 128.8 g (1.43 mol) of an 80% by mass aqueous solution of acrylic acid was placed in another 500-mL Erlenmeyer flask, and 159.0 g of a 27% by mass aqueous solution of sodium hydroxide was added dropwise, with external cooling, to accomplish 75 mol% neutralization. Then, 0.11 g (0.00041 mol) of 2,2'-azobis(2-amidinopropane) dihydrochloride as an azo-based compound and 0.0116 g (0.000067 mol) of ethylene glycol diglycidyl ether as an internal-crosslinking agent were added and dissolved. As a result, a second-stage aqueous monomer solution was prepared.

The system in the separable flask was cooled, and then the entire amount of the second-stage aqueous monomer solution was added to the first-stage polymerization slurry, and the atmosphere in the system adjusted to 27°C was sufficiently replaced with nitrogen. Subsequently, the flask was again immersed in a water bath at 70°C and heated, and second-stage polymerization was performed for 30 minutes.

After the second-stage polymerization, the flask was immersed in an oil bath at 125°C to heat the second-stage polymerization slurry, and distill 227 g of the water out of the system while refluxing n-heptane into the system by azeotropic distillation of the water and n-heptane. Then, 4.42 g (0.51 mmol) of a 2% by mass aqueous solution of ethylene glycol diglycidyl ether as a post-crosslinking agent was added, and the mixture was kept at 80°C for 120 minutes. Subsequently, n-heptane was evaporated, and the mixture was dried to obtain a resin powder. The resin powder was passed through a sieve with a mesh size of 850 $\mu$m to obtain 236.0 g of a water-absorbent resin with a median particle diameter of 380 $\mu$m in which spherical particles were aggregated.

(Example 2)

A 2-L cylindrical round-bottomed separable flask was prepared which had an inside diameter of 110 mm, and was equipped with a reflux condenser, a dropping funnel, a nitrogen gas inlet tube, and a stirrer having stirring blades composed of two sets of four inclined paddle blades with a blade diameter of 50 mm. As a hydrocarbon dispersion medium, 300 g of n-heptane was placed in this flask, and then 0.74 g of a sucrose stearate having an HLB of 3 (Ryoto sugar ester S-370 from Mitsubishi-Kagaku Foods Corporation) as a surfactant and 0.74 g of a maleic anhydride modified ethylene-propylene copolymer (Hi-wax 1105A from Mitsui Chemicals, Inc.) as a polymeric dispersion agent were added thereto. The mixture was heated with stirring to 80°C to dissolve the surfactant, and then cooled to 50°C.

Separately, 92 g (1.02 mol) of an 80% by mass aqueous solution of acrylic acid was placed in a 500-mL Erlenmeyer flask, and 146.0 g of a 21% by mass aqueous solution of sodium hydroxide was added dropwise, with external cooling, to accomplish 75 mol% neutralization. Then, 0.092 g of hydroxyethylcellulose (HEC AW-15F from Sumitomo Seika Chemicals Co. Ltd.) as a thickener, 0.11 g (0.00041 mol) of 2,2'-azobis(2-amidinopropane) dihydrochloride as an azo-based compound, and 0.0064 g (0.000037 mol) of ethylene glycol diglycidyl ether as an internal-crosslinking agent were added and dissolved. As a result, an aqueous monomer solution was prepared.

The rotation speed of the stirrer was adjusted to 500 rpm, and then the aqueous monomer solution prepared as described above was added into the separable flask, and the atmosphere in the system was sufficiently replaced with nitrogen. The flask was subsequently immersed in a water bath at 70°C and heated to start polymerization. Next, at the time when the temperature in the system reached a peak temperature (80 to 90°C) of polymerization, the rotation speed of the stirrer was changed to 1000 rpm, and the flask was heated in an oil bath at 125°C to distill 92 g of the water out of the system while refluxing n-heptane into the system by azeotropic distillation of the water and n-heptane. As a result, first-stage polymerization slurry was obtained.

Separately, 128.8 g (1.43 mol) of an 80% by mass aqueous solution of acrylic acid was placed in another 500-mL Erlenmeyer flask, and 159.0 g of a 27% by mass aqueous solution of sodium hydroxide was added dropwise, with external cooling, to accomplish 75 mol% neutralization. Then, 0.11 g (0.00041 mol) of 2,2'-azobis(2-amidinopropane) dihydrochloride as an azo-based compound and 0.0116 g (0.000067 mol) of ethylene glycol diglycidyl ether as an internal-crosslinking agent were added and dissolved. As a result, a second-stage aqueous monomer solution was prepared.

The system in the separable flask was cooled, and then the entire amount of the second-stage aqueous monomer solution was added to the first-stage polymerization slurry, and the atmosphere in the system adjusted to 27°C was sufficiently replaced with nitrogen. Subsequently, the flask was again immersed in a water bath at 70°C and heated, and second-stage polymerization was performed for 30 minutes.

After the second-stage polymerization, the flask was immersed in an oil bath at 125°C to heat the second-stage polymerization slurry, and distill 144 g of the water out of the system while refluxing n-heptane into the system by azeotropic distillation of the water and n-heptane. Then, 4.42 g (0.51 mmol) of a 2% by mass aqueous solution of ethylene glycol diglycidyl ether as a post-crosslinking agent was added, and the mixture was kept at 80°C for 120 minutes. Subsequently, n-heptane was evaporated, and the mixture was dried to obtain a resin powder. The resin powder was passed through a sieve with a mesh size of 850 $\mu$m to obtain 240.0 g of a water-absorbent resin with a median particle diameter of 380 $\mu$m in which spherical particles were aggregated.

(Reference Example 3)

A 2-L cylindrical round-bottomed separable flask was prepared which had an inside diameter of 110 mm, and was equipped with a reflux condenser, a dropping funnel, a nitrogen gas inlet tube, and a stirrer having stirring blades composed of two sets of four inclined paddle blades with a blade diameter of 50 mm. As a hydrocarbon dispersion medium, 300 g of n-heptane was placed in this flask, and then 0.74 g of a sucrose stearate having an HLB of 3 (Ryoto sugar ester S-370 from Mitsubishi-Kagaku Foods Corporation) as a surfactant and 0.74 g of a maleic anhydride modified ethylene-propylene copolymer (Hi-wax 1105A from Mitsui Chemicals, Inc.) as a polymeric dispersion agent were added thereto. The mixture was heated with stirring to 80°C to dissolve the surfactant, and then cooled to 50°C.

Separately, 92 g (1.02 mol) of an 80% by mass aqueous solution of acrylic acid was placed in a 500-mL Erlenmeyer flask, and 146.0 g of a 21% by mass aqueous solution of sodium hydroxide was added dropwise, with external cooling, to accomplish 75 mol% neutralization. Then, 0.092 g of hydroxyethylcellulose (HEC AW-15F from Sumitomo Seika Chemicals Co. Ltd.) as a thickener, 0.11 g (0.00041 mol) of 2,2'-azobis(2-amidinopropane) dihydrochloride as an azo-based compound, and 0.0064 g (0.000037 mol) of ethylene glycol diglycidyl ether as an internal-crosslinking agent were added and dissolved. As a result, an aqueous monomer solution was prepared.

The rotation speed of the stirrer was adjusted to 600 rpm, and then the aqueous monomer solution prepared as described above was added into the separable flask, and the atmosphere in the system was sufficiently replaced with nitrogen. The flask was subsequently immersed in a water bath at 70°C and heated to start polymerization. Next, at the time when the temperature in the system reached a peak temperature (80 to 90°C) of polymerization, the water bath was adjusted to 80°C, and the reaction mixture was heated for 60 minutes. As a result, first-stage polymerization slurry was obtained.

Separately, 128.8 g (1.43 mol) of an 80% by mass aqueous solution of acrylic acid was placed in another 500-mL Erlenmeyer flask, and 159.0 g of a 27% by mass aqueous solution of sodium hydroxide was added dropwise, with external cooling, to accomplish 75 mol% neutralization. Then, 0.129 g (0.475 mmol) of 2,2'-azobis(2-amidinopropane) dihydrochloride as an azo-based compound and 0.0116 g (0.067 mmol) of ethylene glycol diglycidyl ether as an internal-crosslinking agent were added and dissolved. As a result, a second-stage aqueous monomer solution was prepared.

The rotation speed of the stirrer was changed to 1000 rpm, and then the system in the separable flask was cooled. The entire amount of the second-stage aqueous monomer solution was added to the first-stage polymerization slurry, and the atmosphere in the system adjusted to 27°C was sufficiently replaced with nitrogen. Subsequently, the flask was again immersed in a water bath at 70°C and heated, and second-stage polymerization was performed for 30 minutes. After the second-stage polymerization, the flask was immersed in an oil bath at 125°C to heat the second-stage polymerization slurry, and distill 244 g of the water out of the system while refluxing n-heptane into the system by azeotropic distillation of the water and n-heptane. Then, 4.42 g (0.51 mmol) of a 2% by mass aqueous solution of ethylene glycol diglycidyl ether as a post-crosslinking agent was added, and the mixture was kept at 80°C for 120 minutes. Subsequently, n-heptane was evaporated, and the mixture was dried to obtain a resin powder. The resin powder was passed through a sieve with a mesh size of 850 $\mu$m to obtain 239.0 g of a water-absorbent resin with a median particle diameter of 390 $\mu$m in which spherical particles were aggregated.

(Example 4)

A cylindrical round-bottomed separable flask was prepared which had an inside diameter of 100 mm, and was equipped with a reflux condenser, a dropping funnel, a nitrogen gas inlet tube, and a stirrer having stirring blades (whose surface was coated with a fluororesin) composed of two sets of four inclined paddle blades with a blade diameter of 50 mm. In this flask, 479 g of n-heptane was placed, and then 1.10 g of hexaglycerin diester having an HLB of 9.6 (SY-Glyster SS-5S from Sakamoto Yakuhin Kogyo Co., Ltd.) as a surfactant was added thereto. The mixture was heated to 50°C to dissolve the surfactant, and then cooled to 40°C.

Separately, 92 g (1.03 mol) of an 80.5% by mass aqueous solution of acrylic acid was placed in a 500-mL Erlenmeyer flask, and 147.7 g of a 20.9% by mass aqueous solution of sodium hydroxide was added dropwise while cooling in ice to accomplish 75 mol% neutralization. Then, 0.10 g (0.00037 mol) of potassium persulfate was added and dissolved. As a result, an aqueous monomer solution was prepared. The rotation speed of the stirrer was adjusted to 900 rpm, and then the aqueous monomer solution was added to the separable flask, and the atmosphere in the system was sufficiently replaced with nitrogen. Subsequently, the flask was immersed in a water bath at 70°C and heated, and the polymerization reaction was performed for 1 hour. As a result, polymerization slurry was obtained.

Next, the rotation speed of the stirrer was changed to 1000 rpm, and then the flask was heated in an oil bath at 125°C to distill 90 g of the water out of the system while refluxing n-heptane into the system by azeotropic distillation of the water and n-heptane. Then, 4.14 g (0.00048 mol) of 2% by mass ethylene glycol diglycidyl ether was added as a post-crosslinking agent, and the mixture was kept at 80°C for 120 minutes. Subsequently, n-heptane was evaporated, and the mixture was dried to obtain a resin powder. The resin powder was passed through a sieve with a mesh size of 850 $\mu$m to obtain 90.7 g of a water-absorbent resin with a granular shape. The median particle diameter of the resulting water-absorbent resin was 360 $\mu$m.

(Comparative Example 1)

A 2-L cylindrical round-bottomed separable flask was prepared which had an inside diameter of 110 mm, and was equipped with a reflux condenser, a dropping funnel, a nitrogen gas inlet tube, and a stirrer having stirring blades composed of two sets of four inclined paddle blades with a blade diameter of 50 mm. As a hydrocarbon dispersion medium, 300 g of n-heptane was placed in this flask, and then 0.74 g of a sucrose stearate having an HLB of 3 (Ryoto sugar ester S-370 from Mitsubishi-Kagaku Foods Corporation) as a surfactant and 0.74 g of a maleic anhydride modified ethylene-propylene copolymer (Hi-wax 1105A from Mitsui Chemicals, Inc.) as a polymeric dispersion agent were added thereto. The mixture was heated with stirring to 80°C to dissolve the surfactant, and then cooled to 50°C.

Separately, 92 g (1.02 mol) of an 80% by mass aqueous solution of acrylic acid was placed in a 500-mL Erlenmeyer flask, and 146.0 g of a 21% by mass aqueous solution of sodium hydroxide was added dropwise, with external cooling, to accomplish 75 mol% neutralization. Then, 0.092 g of hydroxyethylcellulose (HEC AW-15F from Sumitomo Seika Chemicals Co. Ltd.) as a thickener, 0.11 g (0.00041 mol) of 2,2'-azobis(2-amidinopropane) dihydrochloride as an azo-based compound, and 0.0064 g (0.000037 mol) of ethylene glycol diglycidyl ether as an internal-crosslinking agent were added and dissolved. As a result, an aqueous monomer solution was prepared.

The rotation speed of the stirrer was adjusted to 500 rpm, and then the aqueous monomer solution prepared as described above was added into the separable flask, and the atmosphere in the system was sufficiently replaced with nitrogen. The flask was subsequently immersed in a water bath at 70°C and heated to start polymerization. Next, at the time when the temperature in the system reached a peak temperature (80 to 90°C) of polymerization, the water bath was adjusted to 80°C, and the reaction mixture was heated for 60 minutes. As a result, first-stage polymerization slurry was obtained.

Separately, 128.8 g (1.43 mol) of an 80% by mass aqueous solution of acrylic acid was placed in another 500-mL Erlenmeyer flask, and 159.0 g of a 27% by mass aqueous solution of sodium hydroxide was added dropwise, with external cooling, to accomplish 75 mol% neutralization. Then, 0.129 g (0.475 mmol) of 2,2'-azobis(2-amidinopropane) dihydrochloride as an azo-based compound and 0.0116 g (0.067 mmol) of ethylene glycol diglycidyl ether as an internal-crosslinking agent were added and dissolved. As a result, a second-stage aqueous monomer solution was prepared.

The rotation speed of the stirrer was changed to 1000 rpm, and then the system in the separable flask was cooled. The entire amount of the second-stage aqueous monomer solution was added to the first-stage polymerization slurry, and the atmosphere in the system adjusted to 27°C was sufficiently replaced with nitrogen. Subsequently, the flask was again immersed in a water bath at 70°C and heated, and second-stage polymerization was performed for 30 minutes. After the second-stage polymerization, the flask was immersed in an oil bath at 125°C to heat the second-stage polymerization slurry, and distill 239 g of the water out of the system while refluxing n-heptane by azeotropic distillation of the water and n-heptane. Then, 4.42 g (0.51 mmol) of a 2% by mass aqueous solution of ethylene glycol diglycidyl ether as a post-crosslinking agent was added, and the mixture was kept at 80°C for 120 minutes. Subsequently, n-heptane was evaporated, and the mixture was dried to obtain a resin powder. The resin powder was passed through a sieve with a mesh size of 850 μm to obtain 244.0 g of a water-absorbent resin with a median particle diameter of 400 μm in which spherical particles were aggregated.

(Comparative Example 2)

A 2-L cylindrical round-bottomed separable flask was prepared which had an inside diameter of 110 mm, and was equipped with a reflux condenser, a dropping funnel, a nitrogen gas inlet tube, and a stirrer having stirring blades composed of two sets of four inclined paddle blades with a blade diameter of 50 mm. As a hydrocarbon dispersion medium, 300 g of n-heptane was placed in this flask, and then 0.74 g of a sucrose stearate having an HLB of 3 (Ryoto sugar ester S-370 from Mitsubishi-Kagaku Foods Corporation) as a surfactant and 0.74 g of a maleic anhydride modified ethylene-propylene copolymer (Hi-wax 1105A from Mitsui Chemicals, Inc.) as a polymeric dispersion agent were added thereto. The mixture was heated with stirring to 80°C to dissolve the surfactant, and then cooled to 50°C.

Separately, 92 g (1.02 mol) of an 80% by mass aqueous solution of acrylic acid was placed in a 500-mL Erlenmeyer flask, and 146.0 g of a 21% by mass aqueous solution of sodium hydroxide was added dropwise, with external cooling, to accomplish 75 mol% neutralization. Then, 0.092 g of hydroxyethylcellulose (HEC AW-15F from Sumitomo Seika Chemicals Co. Ltd.) as a thickener, 0.11 g (0.00041 mol) of 2,2'-azobis(2-amidinopropane) dihydrochloride as an azo-based compound, and 0.0064 g (0.000037 mol) of ethylene glycol diglycidyl ether as an internal-crosslinking agent were added and dissolved. As a result, an aqueous monomer solution was prepared.

The rotation speed of the stirrer was adjusted to 500 rpm, and then the aqueous monomer solution prepared as described above was added into the separable flask, and the atmosphere in the system was sufficiently replaced with nitrogen. The flask was subsequently immersed in a water bath at 70°C and heated to start polymerization. Next, at the time when the temperature in the system reached a peak temperature (80 to 90°C) of polymerization, the rotation speed of the stirrer was changed to 1000 rpm, and the flask was heated in an oil bath at 125°C to distill 46 g of the water out of the system while refluxing n-heptane into the system by azeotropic distillation of the water and n-heptane. As a result, first-stage polymerization slurry was obtained.

Separately, 128.8 g (1.43 mol) of an 80% by mass aqueous solution of acrylic acid was placed in another 500-mL Erlenmeyer flask, and 159.0 g of a 27% by mass aqueous solution of sodium hydroxide was added dropwise, with external cooling, to accomplish 75 mol% neutralization. Then, 0.11 g (0.00041 mol) of 2,2'-azobis(2-amidinopropane) dihydrochloride as an azo-based compound and 0.0116 g (0.000067 mol) of ethylene glycol diglycidyl ether as an internal-crosslinking agent were added and dissolved. As a result, a second-stage aqueous monomer solution was prepared.

The system in the separable flask was cooled, and then the entire amount of the second-stage aqueous monomer solution was added to the first-stage polymerization slurry, and the atmosphere in the system adjusted to 27°C was sufficiently replaced with nitrogen. Subsequently, the flask was again immersed in a water bath at 70°C and heated, and second-stage polymerization was performed for 30 minutes.

After the second-stage polymerization, the flask was immersed in an oil bath at 125°C to heat the second-stage polymerization slurry, and distill 213 g of the water out of the system while refluxing n-heptane into the system by azeotropic distillation of the water and n-heptane. Then, 4.42 g (0.51 mmol) of a 2% by mass aqueous solution of ethylene glycol diglycidyl ether as a post-crosslinking agent was added, and the mixture was kept at 80°C for 120 minutes. Subsequently, n-heptane was evaporated, and the mixture was dried to obtain a resin powder. The resin powder was passed through a sieve with a mesh size of 850 μm to obtain 238.0 g of a water-absorbent resin with a median particle

diameter of 360 μm in which spherical particles were aggregated.

Table 1 shows the results of evaluation of the water-absorbent resins produced in the examples and comparative examples, as well as absorbent articles obtained using these water-absorbent resins, by the testing methods for evaluation described above.

[Table 1]

| | Cavity Area Ratio (%) | Physiological Saline-Retention Capacity (g/g) | Water-Retention Ratio under a Load (%) | Average Growth Length (cm) of Seedlings |
|---|---|---|---|---|
| Example 1 | 11 | 40 | 69 | 9 |
| Example 2 | 11 | 30 | 71 | 9 |
| Example 3 | 6 | 28 | 74 | 7 |
| Example 4 | 32 | 21 | 59 | 13 |
| Comparative Example 1 | 3 | 42 | 84 | 3 |
| Comparative Example 2 | 4 | 47 | 89 | 3 |

In table 1, example 3 is a reference example.

As is clear from the results shown in Table 1, it is observed that the water-absorbent resins of Examples 1, 2 and 4 in which the ratio of the area of cavity portions (cavity area ratio) as calculated according to Equation (I) above is from 11% to 32%, exhibit high water absorbency, and yet exhibit water retention under a load that is not excessively high, and high water-discharge capacity. Thus, these water-absorbent resins, when blended into a soil, allow plants to grow favorably.

Reference Signs List

10    sample stage
11    water-absorbent resin
W     particle length

**Claims**

1.  A water-absorbent resin comprising a polymer of (meth)acrylic acid or a salt thereof, wherein
    when a cross-sectional image of the water-absorbent resin is observed using X-ray computed tomography, the water-absorbent resin has a ratio of the area of cavity portions (cavity area ratio) in the cross-sectional image from 11% to 32%, as calculated according to Equation (I):

$$\text{cavity area ratio } [\%] = \{\text{total cross-sectional area of cavity portions (B) in the water-absorbent resin}/(\text{total cross-sectional area of resin portions (A) in the water-absorbent resin} + \text{total cross-sectional area of cavity portions (B) in the water-absorbent resin})\} \times 100 \quad (I).$$

2.  The water-absorbent resin according to claim 1, wherein the water-absorbent resin has a water-retention ratio under a load of 75% or less.

3.  The water-absorbent resin according to claim 1 or 2, wherein the water-absorbent resin has a granular shape, a substantially spherical shape, or a shape in which particles having a substantially spherical shape are aggregated.

4. A soil water-retaining material comprising the water-absorbent resin according to any one of claims 1 to 3.

5. An agricultural/horticultural material comprising the water-absorbent resin according to any one of claims 1 to 3.

**Patentansprüche**

1. Wasserabsorbierendes Harz, das ein Polymer von (Meth)acrylsäure oder einem Salz davon umfasst, wobei wenn ein Querschnittsbild des wasserabsorbierenden Harzes unter Verwendung von Röntgencomputertomographie betrachtet wird, das wasserabsorbierende Harz einen Anteil der Fläche der Hohlraumabschnitte (Hohlraumflächenanteil) in dem Querschnittsbild von 11 % bis 32 % aufweist, wie mittels Gleichung (I) berechnet wird:

Hohlraumflächenanteil [%] = {Gesamtquerschnittsfläche von Hohlraumabschnitten (B) im wasserabsorbierenden Harz / (Gesamtquerschnittsfläche von Harzabschnitten (A) im wasserabsorbierenden Harz + Gesamtquerschnittsfläche von Hohlraumabschnitten (B) im wasserabsorbierenden Harz)} x 100 (I).

2. Wasserabsorbierendes Harz nach Anspruch 1, wobei das wasserabsorbierende Harz unter Last einen Wasserretentionsanteil von 75 % oder weniger aufweist.

3. Wasserabsorbierendes Harz nach Anspruch 1 oder 2, wobei das wasserabsorbierende Harz eine körnige Form, eine im Wesentlichen kugelförmige Form oder eine Form, in der Teilchen mit einer im Wesentlichen kugelförmigen Form aggregiert sind, aufweist.

4. Bodenwasser speicherndes Material, das ein wasserabsorbierendes Harz nach einem der Ansprüche 1 bis 3 umfasst.

5. Agrikultur-/Hortikultur-Material, das ein wasserabsorbierendes Harz nach einem der Ansprüche 1 bis 3 umfasst.

**Revendications**

1. Résine absorbant l'eau, comprenant un polymère d'acide (méth)acrylique ou un sel de celui-ci, dans laquelle lorsqu'une image en section transversale de la résine absorbant l'eau est observée en utilisant une tomodensitométrie, la résine absorbant l'eau présente une proportion de l'aire de parties de cavité (proportion d'aire de cavités) dans l'image en section transversale de 11 % à 32 %, telle que calculée selon l'équation (I) :

```
proportion d'aire de cavités [%] = {aire totale en
section transversale de parties de cavité (B) dans la résine
absorbant l'eau/(aire totale en section transversale de
parties de résine (A) dans la résine absorbant l'eau + aire
en section transversale totale des parties de cavité (B) dans
la résine absorbant l'eau)} x 100 (I).
```

2. Résine absorbant l'eau selon la revendication 1, dans laquelle la résine absorbant l'eau présente une proportion de rétention d'eau sous une charge de 75 % ou moins.

3. Résine absorbant l'eau selon la revendication 1 ou 2, dans laquelle la résine absorbant l'eau présente une forme granulaire, une forme sensiblement sphérique ou une forme dans laquelle des particules présentant une forme sphérique sont agrégées.

**4.** Matériau retenant l'eau de sol comprenant la résine absorbant l'eau selon l'une quelconque des revendications 1 à 3.

**5.** Matériau agricole/horticole comprenant la résine absorbant l'eau selon l'une quelconque des revendications 1 à 3.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3227301 A
- JP S62273283 A
- EP 2998325 A1
- US 2009281247 A1
- US 2014127510 A1
- US 2015216740 A1